# EUROPEAN PATENT APPLICATION

(11) **EP 3 489 874 A1**
(43) Date of publication of application: **29.05.2019**
(21) Application number: 18150885.4
(22) Date of filing: 09.01.2018
(51) Int. Cl.: G06Q 20/02

(54) **SYSTEM AND METHOD FOR DUAL BLOCKCHAIN BASED VALIDATION OF INSTRUMENT REFERENCE DATA AND TRANSACTION REPORTING**

(30) Priority: 27.11.2017 IN 201741042451
(71) Applicant: Wipro Limited, 560 035 Karnataka (IN)
(72) Inventor: RAJ, Vignesh, 629001 TamilNadu (IN); RAJGURU, Amrit, 753 008 Odisha (IN)
(74) Representative: Finnegan Europe LLP

(57) **Abstract**

System and method for dual blockchain based validation of instrument reference data and transaction reporting is disclosed. The method includes receiving raw instrument reference data from a plurality of financial entities that are part of a blockchain network. The method further includes validating the raw instrument reference data based on a smart contract system that executes a plurality of data rules on the raw instrument reference data. The method includes determining in real-time, based on the plurality of data rules, whether the raw instrument reference data includes at least one discrepancy. The method further includes receiving corrected raw instrument reference data contemporaneous to determining that the raw instrument reference data comprises at least one discrepancy. The method includes consolidating instrument reference data received from each of the plurality of financial entities to generate validated instrument reference data. The validated instrument reference data includes original and corrected instrument reference data.

## Description

### Technical Field

This disclosure relates generally to transaction reporting using blockchain and more particularly to system and method for dual blockchain based validation of instrument reference data and transaction reporting.

### Background

Markets in Financial Instruments Directive (MiFID) II transaction reporting involves reporting of details of transactions made by investment firms on financial instruments to the regulator. This applies to all investment firms registered in the European Economic Area (EEA) and also includes the branches of overseas firms carrying on investment activities in the EEA. MiFID II is an overhaul of MiFID I transaction reporting introduced in 2007. The scope of a transaction may include the following: the sale or purchase of a financial instrument; entering or closing out a derivative contract in a financial instrument; an increase or decrease in the notional amount for a derivative contract that is a financial instrument. Further, the types of instruments needed to be reported for MiFID II transaction reporting includes financial instruments admitted to trading or traded on an EU trading venue or for which a request for admission has been made; financial instruments where the underlying instrument is traded on a trading venue; financial instruments where the underlying is an index or a basket composed of instruments traded on a trading venue.

The purpose of MiFID II transaction reporting is to detect and investigate market abuse and to support the fair and orderly functioning of financial markets. However, there are some key challenges related to transaction reporting: widening of the scope of instruments which need to be reported and the scope of information which needs to be reported. Further, the scope of trading venues in which transactions on financial instruments eligible for reporting are performed is also widened.

There are a number of technical problems with the current architecture, such as presence of intermediaries, no master data repository, no real-time processing, and absence of transparency in data. The present disclosure generally relates to a dual blockchain network that overcomes or mitigates at least some of those technical problems.

### SUMMARY

In one embodiment, a method for validation of instrument reference data disclosed. The method includes receiving, by a computing node, raw instrument reference data from a plurality of financial entities. Each of the plurality of financial entities and the computing node are part of a blockchain network. The blockchain network comprises a plurality of computing nodes comprising the computing node. The method further includes validating, by the computing node, the raw instrument reference data based on a smart contract system installed in the computing node. The smart contract system executes a plurality of data validation rules on the raw instrument reference data. The method includes determining in real-time, by the computing node, whether the raw instrument reference data comprises at least one discrepancy, based on application of the plurality of data validation rules on the raw instrument reference data. The method further includes receiving, by the computing node, corrected raw instrument reference data contemporaneous to determining that the raw instrument reference data comprises at least one discrepancy, from one or more of the plurality of financial entities. The method includes consolidating instrument reference data received from each of the plurality of financial entities to generate validated instrument reference data. The validated instrument reference data comprises at least one of original or corrected raw instrument reference data.

The present disclosure may also provide a method computer-readable medium comprising instructions that, when executed by a computer, cause the computer to perform the foregoing method. Further, the present disclosure may also provide a computer program product for performing the foregoing method.

In another embodiment, a method for reporting financial transaction reports is disclosed. The method includes receiving, by a computing node, transaction reports from a plurality of financial entities. Each of the plurality of financial entities and the computing node are part of a blockchain network. The blockchain network comprises a plurality of computing nodes comprising the computing node. The method further includes validating, by the computing node, the transaction reports based on a smart contract system installed in the computing node. The smart contract system executes a plurality of report validation rules on the transaction reports based on validated instrument reference data stored in a database. The method includes determining in real-time, by the computing node, whether the transaction reports comprises at least one discrepancy, based on application of the plurality of report validation rules on the transaction reports. The method further includes receiving, by the computing node, corrected transaction reports contemporaneous to determining that the transaction reports comprise at least one discrepancy, from one or more of the plurality of financial entities. The method includes consolidating, by the computing node, transaction reports received from each of the plurality of financial entities to generate validated transaction reports. The validated transaction reports comprise at least one of original or corrected transaction reports.

The present disclosure may also provide a method computer-readable medium comprising instructions that, when executed by a computer, cause the computer to perform the foregoing method. Further, the present disclosure may also provide a computer program product for performing the foregoing method.

In yet another embodiment, a smart contract system for validation of instrument reference data is disclosed. The smart contract system includes a processor and a memory communicatively coupled to the processor and having processor instructions stored thereon, causing the processor, on execution to receive raw instrument reference data from a plurality of financial entities, wherein each of the plurality of financial entities and the computing node are part of a blockchain network, and wherein the blockchain network comprises a plurality of computing nodes comprising the computing node; validate the raw instrument reference data by executing a plurality of data rules on the raw instrument reference data; determine in real-time, whether the raw instrument reference data comprises at least one discrepancy, based on application of the plurality of data rules on the raw instrument reference data; receive corrected raw instrument reference data contemporaneous to determining that the raw instrument reference data comprises at least one discrepancy, from one or more of the plurality of financial entities; and consolidate instrument reference data received from each of the plurality of financial entities to generate validated instrument reference data, wherein the validated instrument reference data comprises at least one of original or corrected raw instrument reference data.

In another embodiment, a smart contract system for reporting transaction reports is disclosed. The smart contract system includes a processor and a memory communicatively coupled to the processor and having processor instructions stored thereon, causing the processor, on execution to receive transaction reports from a plurality of financial entities, wherein each of the plurality of financial entities and the computing node are part of a blockchain network, and wherein the blockchain network comprises a plurality of computing nodes comprising the computing node; validate the transaction reports by executing a plurality of report rules on the transaction reports based on validated instrument reference data stored in a database; determine in real-time, whether the transaction reports comprises at least one discrepancy, based on application of the plurality of report rules on the transaction reports; receive corrected transaction reports contemporaneous to determining that the transaction reports comprise at least one discrepancy, from one or more of the plurality of financial entities; and consolidate transaction reports received from each of the plurality of financial entities to generate validated transaction reports, wherein the validated transaction reports comprise at least one of original or corrected transaction reports.

The present disclosure may also provide a system comprising: a smart contract system for validation of instrument reference data as described herein; and a smart contract system for reporting transaction reports as described herein. The present disclosure may also provide a method performed by such a system. Further, the present disclosure may also provide a computer-readable medium and/or a computer program product for performing such a method.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates an environment in which various embodiments may be employed.
**FIG. 2** illustrates a block diagram of various components of a smart contract system and its interaction with other entities in a blockchain network for validation of instrument reference data, in accordance with an embodiment.
**FIG. 3** illustrates a block diagram of various components of a smart contract system and its interaction with other entities in a blockchain network for reporting of transaction reports, in accordance with an embodiment.
**FIG. 4** illustrates a flowchart for validation of instrument reference data, in accordance with an embodiment.
**FIG. 5** illustrates a flowchart of a method for sharing and propagating validated instrument reference data in a blockchain network, in accordance with an embodiment.
**FIG. 6** illustrates a flowchart of a method for reporting financial transaction reports, in accordance with an embodiment.
**FIG. 7** illustrates a flowchart of a method for sharing and propagating validated financial transaction reports in a blockchain network, in accordance with an embodiment.
**FIG. 8** illustrates a block diagram of an exemplary computer system for implementing various embodiments.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

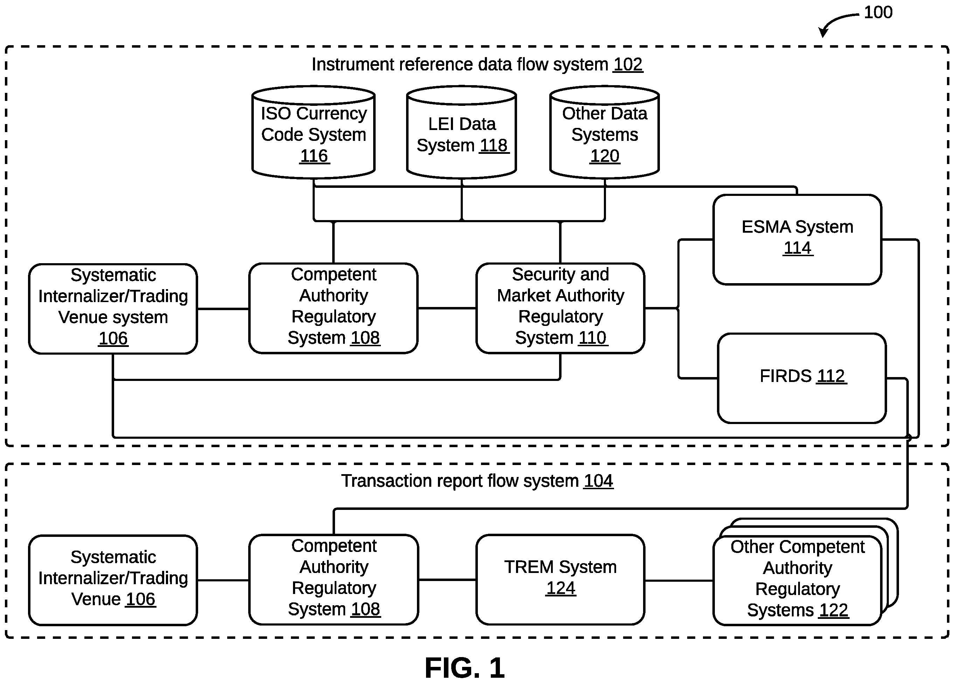

Additional illustrative embodiments are listed below. In one embodiment, FIG. 1 illustrates an exemplary environment 100 in which various embodiments may be employed. For submission of instrument reference data, environment 100 includes an instrument reference data flow system 102. The instrument may be a financial instrument, for example, securities (Bonds, T-bills, commercial papers, stocks), bond futures, stock options, equity futures, or currency futures etc. For submission of transaction reports, environment 100 includes a transaction report flow system 104. Transaction reports are reports related to transactions executed for financial instruments.

Instrument reference data flow system 102 includes a systematic internalizer/ trading venue system 106, a competent authority regulatory system 108, a security and market authority regulatory system 110, a Financial Instrument Reference Data System (FIRDS) 112, and a European Securities and Markets Authority (ESMA) system 114.

Systematic internalizer/trading venue system 106 may be associated with a systematic internalizer, which may be an investment firm which, on an organized, frequent, systematic and substantial basis, deals on own account by executing client orders outside a trading venue without operating a multilateral system. Additionally, systematic internalizer/trading venue system 106 may be associated with a trading venue, which is an official venue where securities are bought and sold. A trading venue, for example, may be a regulated market, a multilateral trading facility, or an organized trading facility.

Competent authority regulatory system 108 may be associated with a national competent authority. The nation competent authority, for example, may be an authority that acts as a single point of contact for each member state in the European Union (EU) for implementing the provisions of MiFID II directive in its jurisdiction. Further, ESMA system 114 may be associated with a supervising authority. The supervising authority, for example, may be the ESMA in the EU region, which is an independent EU authority that contributes to safeguarding the stability of the EU's financial system by enhancing the protection of investors and promoting stable and orderly financial markets.

When competent authority regulatory system 108 is associated with a non-delegating national competent authority, systematic internalizer/trading venue system 106 may send raw instrument reference data associated with financial instruments to competent authority regulatory system 108 by the specified cut-off time on any given day (for example, day 'T') in which transaction of the financial instrument was executed. The cut-off time, for example, may be 09:00 CET on day T.

In addition to systematic internalizer/trading venue system 106, an approved publication arrangement (not shown in FIG. 1) or a consolidated tape provider (not shown in FIG. 1) may also send raw instrument reference data. These are data providers who are authorized by ESMA system 114 to submit raw instrument reference data on behalf of investment firms that are obliged to submit the same data directly to the ESMA system 114. More specifically, the approved publication arrangement may be a data reporting service provider that provides the service of publishing trade reports on behalf of investment firms and the consolidated tape provider may be a data reporting service provider that provides the service of collecting trade reports for financial instruments from systematic internalizer/ trading venue system 106 and the approved publication arrangements. The consolidated tape provider may further consolidate collected reports into a continuous electronic live data stream that includes price and volume data per financial instrument.

Once competent authority regulatory system 108 receives raw instrument reference data, it may perform file validation and content validation of the raw instrument reference data. Post validation, competent authority regulatory system 108 may forward validated instrument reference data to ESMA system 114 by a specified cut-off time on the day of transaction, i.e., day T. This cut-off time, for example, may be 09:30 CET to 11:59 CET on day T.

However, when competent authority regulatory system 108 is associated with a delegating national competent authority, systematic internalizer/trading venue system 106, the approved publication arrangements, and the consolidated tape provider may directly send raw instrument reference data to ESMA system 114 by the specified cut-off time. In this case, since competent authority regulatory system 108 is not involved, ESMA system 114 may perform the validation of the raw instrument reference data. During the validation process, in order to access specific data required to validate the received raw instrument reference data, ESMA system 114 may also interface with multiple entities, such as, an ISO Currency code system 116, a Legal Entity Identifier (LEI) data system 118, and other data systems 120.

In both the scenarios given above, validated instrument reference data may be consolidated to form FIRDS 112, which may be made available to other competent authority regulatory systems (not shown in FIG. 1) in a downloadable format on day T+1, i.e., one day after the day of transaction. The validated instrument reference data may also be made available to the public in the website of ESMA system 114 on day T+1. By way of an example, the validated instrument reference data may be made available by 08:00 CET on day T+1.

The data in FIRDS 112 may include three files, i.e., a full reference data file that may include instrument reference data of all the instruments that are still active, a delta reference data file that includes the difference between the current day's full reference data file and the previous day's full reference data file, and an invalid records delta file that includes records that are no longer part of the full reference data file.

In case of non-delegating national competent authorities, a feedback file may be sent by ESMA system 114 to a relevant competent authority (for example, security and market authority regulatory system 110 or systematic internalizer/ trading venue system 106) informing it of the validation status of the instrument reference data. The feedback file is sent by day T+1. However, in case of delegating national competent authorities, a feedback file may be sent by ESMA system 114 informing systematic internalizer/trading venue system 106 regarding validation status of the submitted raw reference data by day T+1. As there is no real-time feedback and there is a dependency on the feedback file, which would be received after day T+1, corrected instrument reference data can only be sent to competent authority regulatory system 108 or ESMA system 114 after day T+2. In other words, corrected instrument reference data can only be received two days after the day of executing the transaction.

In case of transaction report flow system 104, systematic internalizer/ trading venue system 106 may send transaction reports to competent authority regulatory system 108, which may be the relevant competent authority in this case. The transaction reports may be shared by day T+1, i.e., day R. Competent authority regulatory system 108 may perform validation of the received transaction reports. To this end, as shown in FIG. 1, competent authority regulatory system 108 may access validated instrument reference data stored in FIRDS 112 as of the day of execution, i.e., day T. The validated transaction reports may be exchanged with other competent authority regulatory system 122 through a Transaction Report Exchange Mechanism (TREM) system 124 by day R+1. In order to inform systematic internalizer/trading venue system 106 or approved reporting mechanism, regarding status of validation of the transaction reports shared by them, a feedback file that includes the validation status, may be sent to respective entity by day R+1. This feedback file may be used by the respective entity for error correction and re-submission of corrected transaction reports.

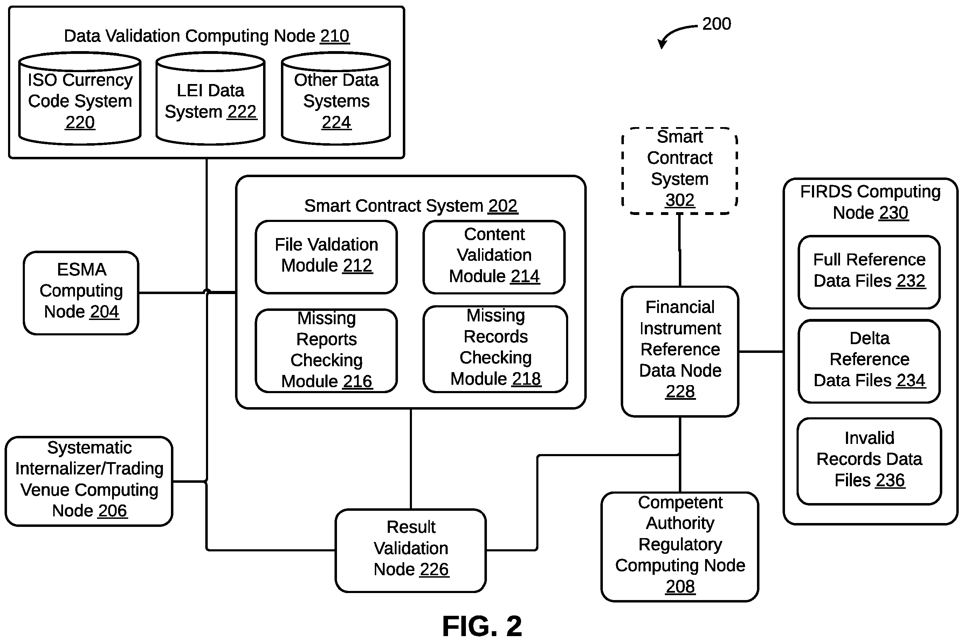

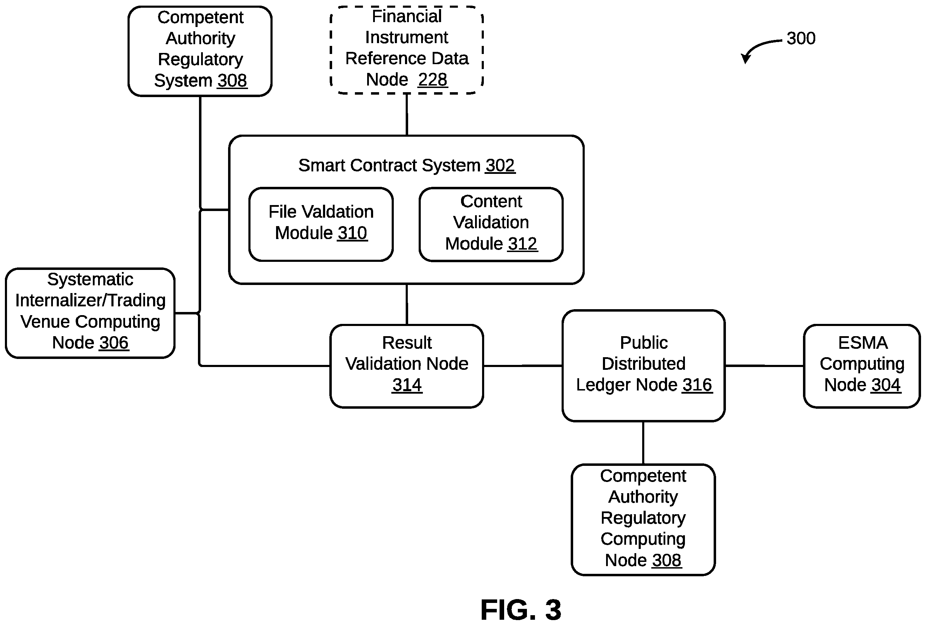

The problems in instrument reference data flow system 102 and transaction report flow system 104 may be resolved by use of a dual blockchain network that includes a blockchain network 200 and a blockchain network 300, such that, blockchain network 300 may communicate with blockchain network 200 to access validated instrument reference data. Blockchain network 200 is illustrated in FIG. 2 and blockchain network 300 is illustrated in FIG. 3.

Referring to FIG. 2, a block diagram of various components of a smart contract system 202 and its interaction with other entities in blockchain network 200 for validation of instrument reference data is illustrated, in accordance with an embodiment. Blockchain network 200 may be a permission based blockchain model for submission, validation, and maintenance of instrument reference data. Blockchain network 200 may include a plurality of computing nodes and each of the plurality of computing nodes may be one of a regulatory computing node (for example, an ESMA computing node 204), a trading venue or systematic internalizer computing node (for example, a systematic internalizer/trading venue computing node 206), a national competent authority computing node (for example, a competent authority regulatory computing node 208), and a data provider computing node (for example, a data validation computing node 210). In blockchain network 200, ESMA computing node 204 may act as the master control node.

Though smart contract system 202 has been shown as a separate entity, it may be installed on each of the plurality of computing nodes in blockchain network 200. Smart contract system 202 may include a file validation module 212, a content validation module 214, a missing reports checking module 216, and a missing records checking module 218. Each of these modules may include a plurality of data rules that are executed on raw instrument reference data received from systematic internalizer/trading venue computing node 206. Executing the plurality of data rules on the raw instrument reference data may validate the raw instrument reference data. To this end, smart contract system 202 may also communicate with data validation computing node 210 to access data from an ISO currency code system 220, LEI data system 222, and other data systems 224. Systematic internalizer/trading venue computing node 206 may also be connected to data validation computing node 210 to validate raw instrument reference data and non-working days data, using the installed smart contract system.

Post validation of raw instrument reference data, results of the validation may be made available in a result validation node 226 in blockchain network 200. Result validation node 226 may be accessed by systematic internalizer/trading venue computing node 206 (and all other computing nodes in blockchain 200) to determine if there was any discrepancy in raw instrument reference data provided by it. Accordingly, systematic internalizer/trading venue computing node 206 may send corrected raw instrument reference data to smart contract system 202. As result of validation are immediately made available on blockchain network 200, provider of raw instrument reference data can determine in real-time if any corrections are required in the provided data. Moreover, financial crimes can also be detected on the fly as validation results are immediately available.

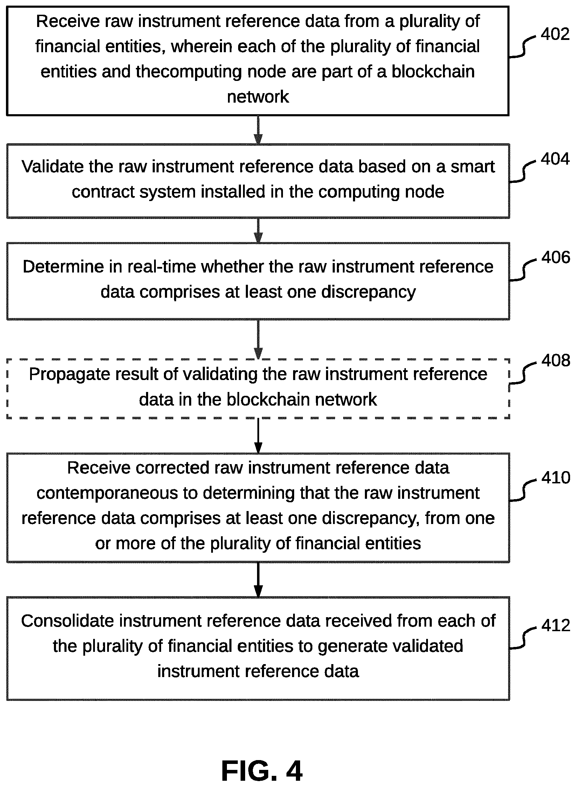

Once corrected raw instrument reference data (in case of any discrepancy in the raw instrument reference data provided earlier) is received from systematic internalizer/trading venue computing node 206, smart contract system 202 may send validated instrument reference data to result validation node 226, which may further forwards the same to financial instrument reference data computing node 228. Competent authority regulatory computing node 208 may access financial instrument reference data node 228 for transaction reporting requirements. The financial instrument reference data node 228 may also connect with a FIRDS computing node 230 that may include full reference data files 232, delta reference data files 234, and invalid records data files 236. The method for validation of instrument reference data is further explained in detail in conjunction with FIG. 4.

Referring to FIG. 3, a block diagram of various components of a smart contract system 302 and its interaction with other entities in blockchain network 300 for reporting transaction reports is illustrated, in accordance with an embodiment. Similar to blockchain network 200, blockchain network 300 may also be a permission based blockchain model and may be in communication with blockchain network 200 to access validated instrument reference data that is used for validation and maintenance of transaction reports.

Similar to blockchain 200, blockchain network 300 may also include a plurality of computing nodes and each of the plurality of computing nodes may be one of a regulatory computing node (for example, an ESMA computing node 304), a trading venue or systematic internalizer computing node (for example, a systematic internalizer/trading venue computing node 306), and a national competent authority computing node (for example, a competent authority regulatory computing node 308). In blockchain network 300, competent authority regulatory computing node 308 acts as the master control node.

Though smart contract system 302 has been shown as a separate entity, it may be installed on each of the plurality of computing nodes in blockchain network 300. Smart contract system 302 may include a file validation module 310 and a content validation module 312. Each of these modules may include a plurality of report rules that may be executed on transaction reports received from systematic internalizer/trading venue computing node 306. Executing the plurality of report rules on the transaction reports may validate them. To this end, smart contract system 302 may also communicate with financial instrument reference data node 228 in blockchain network 200 to access validated instrument reference data.

Post validation of the transaction reports, results of the validation may be made available in a result validation node 314 in blockchain network 300. Result validation node 314 may be accessed by systematic internalizer/trading venue computing node 306 (and all other computing nodes in blockchain network 300) to determine if there was any discrepancy in transaction reports provided by it. Accordingly, systematic internalizer/trading venue computing node 306 may send corrected transaction reports to smart contract system 302.

Result validation node 314 may also be directly connected to transaction report system of a public distributed ledger node 316, which may store the validated transactions reports. Public distributed ledger node 316 may further be connected with all competent authority regulatory computing node (including competent authority regulatory computing node 308) and ESMA computing node 304.

Referring now to FIG. 4, a flowchart for validation of instrument reference data in a blockchain network is illustrated, in accordance with an embodiment. The blockchain network (for example, blockchain network 200) may include a plurality of computing nodes. In an embodiment, each of the plurality of computing nodes may be one of a regulatory computing node, a trading venue or systematic internalizer computing node, a national competent authority computing node, and a data provider computing node. In other words, the plurality of computing nodes may be divided into the four categories mentioned above. This has been explained before in conjunction with FIG. 2.

In an embodiment, in the blockchain network, one or more regulatory computing nodes may be recognized as master control nodes, which can override all other computing nodes. By way of an example, one of the functions of the master control node may be to push new rules and regulations into the blockchain network. Thus, the master control node may be required from a regulation point of view. When there are multiple regulatory computing nodes, the system would not fail when one such node goes off.

To enable each of the plurality of computing nodes to submit, validate or manage instrument reference data, a smart contract system, which is a software program, may be installed on each of the plurality of computing nodes and may include a plurality of data rules. The plurality of data rules may include, but are not limited to file validation rules, content validation rules, missing reports checking rules, and missing records checking rules. The rules may be executed by the smart contract system. Thus, the rules may comprise computer-interpretable or computer-executable instructions.

Before the relevant cut-off time, each of a plurality of financial entities, i.e., trading venue computing node and/or systematic internalizer computing node (for example, Systematic Internalizer/Trading Venue Computing Node 206), may upload raw instrument reference data to the blockchain network. In addition to the raw instrument reference data, non-working days data may also be submitted to the blockchain network at the cut-off time. Thereafter, at step 402, a computing node associated with a relevant competent authority, may receive raw instrument reference data from the plurality of financial entities that are registered in the jurisdiction of the relevant competent authority. It will be apparent to a person skilled in the art that multiple such computing nodes associated with different relevant competent authority would receive raw instrument reference data from financial entities that are registered with a respective relevant competent authority.

At step 404, the computing node may validate the raw instrument reference data based on the smart contract system installed in the computing node. In other words, the computing node may invoke or activate the smart contract system in response to receiving the raw instrument reference data. After being invoked or activated, the smart contract system may execute the plurality of data rules on the raw instrument reference data. As a result, the raw instrument reference data may be validated for files and content of the files. The raw instrument reference data may also be checked for missing reports and missing records.

In an embodiment, for execution and application of the plurality of data rules during the validation process, the smart contract system may access the data needed for the validation process. Examples of such data may include, but are not limited to ISO currency code and LEI data. The smart contract system may access the data from one or more data validation entities, each of which may act as a computing node in the blockchain network. For example, ISO currency code system 220 and LEI data system 222. As a result of being a part of the blockchain network, each of the one or more data validation entities may make the data available on the blockchain network. This may later be accessed by a smart contract system installed on any computing node in the blockchain network.

Based on application of the plurality of data rules on the raw instrument reference data, the computing node, at step 406, may determine in real-time whether the raw instrument reference data includes one or more discrepancies or not. Examples of one or more discrepancies may include, but are not limited to issues with files or content of the files, and missing reports or records. The one or more discrepancies may be shared with one or more of the plurality of entities that shared raw reference instrument data with discrepancies. In response, the one or more of the plurality of entities may share corrected raw instrument reference data with the computing node based on the identified discrepancies.

In an embodiment, at step 408, results of validating the raw instrument reference data may be propagated in the blockchain network. In other words, outcome of application of the data rules, which may include one or more discrepancies, may be made available on the public distributed ledger (for example, financial instrument reference Data node 228) or a result validation node (for example, result validation node 226). The public distributed ledger or the result validation node can be accessed by each of the plurality of financial entities and thus also by the financial entity that submitted erroneous instrument reference data. As a result, as soon as the information regarding discrepancy in raw instrument reference data is made available on the public distributed ledger, the financial entity may access this information and re-submit corrected raw instrument reference data. As a result, the delay of two days in submitting corrected instrument reference data in conventional systems, may be removed and the corrected information may be immediately available.

Thus, at step 410, contemporaneous to determining that the raw instrument reference data may include the one or more discrepancies, the computing node may receive corrected raw instrument reference data from the one or more of the plurality of financial entities. In other words, only those financial entities that had provided data with discrepancies, may need to provide corrected raw instrument reference data to the computing node.

Once corrected raw instrument reference data is received by the computing node, instrument reference data received from each of the plurality of financial entities may be consolidated to generate validated instrument reference data. Thus, the validated instrument reference data may include one or more of original raw instrument reference data (which did not include any discrepancy) and corrected raw instrument reference data (which was received after identifying discrepancies).

Thereafter, the validated instrument reference data and the non-working days data may be added to the public distributed ledger (for example, financial instrument reference data node 228). In an embodiment, the validated instrument reference data may be used by FIRDS computing node 230 and the non-working days data may be used by ESMA computing node 204.

It will be apparent to a person skilled in the art that steps 402 to 412 would be performed by multiple computing nodes in the blockchain network at any given time. In an embodiment, each of these multiple computing nodes may be regulatory computing nodes and may be associated with a relevant competent authority or the ESMA.

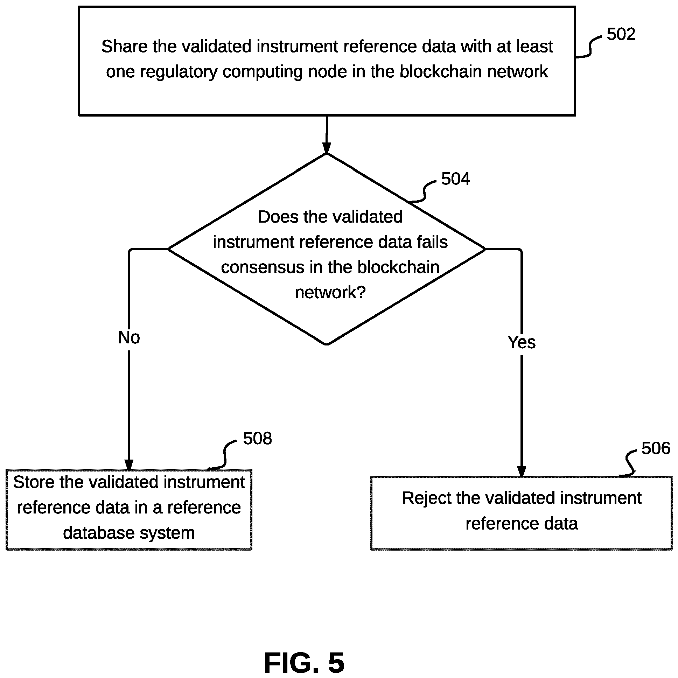

Referring now to FIG. 5, a flowchart of a method for sharing and propagating validated instrument reference data in a blockchain network is illustrated, in accordance with an embodiment. Once the validated instrument reference data is generated, it may be shared, at step 502, with one or more regulatory computing nodes in the blockchain network. A regulatory computing node, for example, may be associated with a jurisdiction specific relevant competent authority (for example, competent authority regulatory computing node 208) or the ESMA (for example, ESMA computing node 204).

At step 504, a check may be performed to determine whether the validated instrument reference data fails consensus in the blockchain network. When the validated instrument reference data fails the consensus, the validated instrument reference data is rejected at step 506 and may not be further propagated in the blockchain network. However, when the validated instrument reference data gets the consensus, at step 508, the validated instrument reference data is stored in a reference data system database (for example, financial instrument reference data node 228). The reference data system database may serve as the public distributed ledger database. In an embodiment, the public distributed ledger database may be a part of FIRDS computing node 230.

The instrument reference data may be validated not just by the relevant competent authority but also by each of the other national competent authorities. This ensures that data available in the ledger is reliable and trustworthy. Moreover, validation of the instrument reference data by all national competent authorities instead of just the relevant competent authorities makes the validation process transparent and promotes faster identification of market abuse issues.

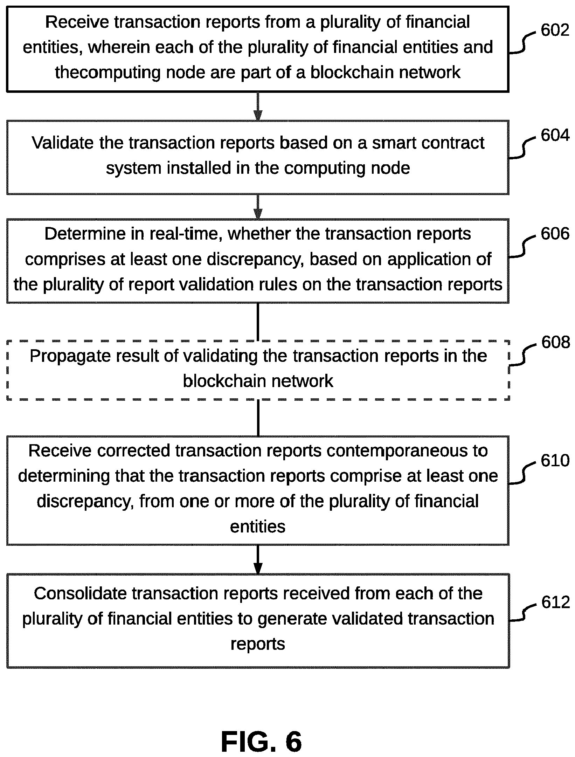

Referring now to FIG. 6, a flowchart of a method for reporting financial transaction reports in a blockchain network is illustrated, in accordance with an embodiment. The blockchain network (for example, blockchain network 300) may include a plurality of computing nodes. In an embodiment, each of the plurality of computing nodes may be one of a regulatory computing node, a trading venue or systematic internalizer computing node, and a national competent authority computing node. This has been explained before in conjunction with FIG. 3.

To enable each of the plurality of computing nodes to submit, validate or manage transaction reports, a smart contract system (for example, smart contract system 302), which is a software program, may be installed on each of the plurality of computing nodes and includes a plurality of report rules. The plurality of report rules may include, but are not limited to file validation rules and content validation rules. The rules may be executed by the smart contract system. Thus, the rules may comprise computer-interpretable or computer-executable instructions.

Before the relevant cut-off time, each of a plurality of financial entities, i.e., trading venue computing node and/or systematic internalizer computing node (for example, systematic internalizer/trading venue computing node 306), may upload transaction reports to the blockchain network. Thereafter, at step 602, a computing node associated with a relevant competent authority, may receive transaction reports from the plurality of financial entities that are registered in the jurisdiction of the relevant competent authority. It will be apparent to a person skilled in the art that multiple such computing nodes associated with different relevant competent authority would receive transaction reports from financial entities that are registered with a respective relevant competent authority.

At step 604, the computing node may validate the transaction reports based on the smart contract system installed in the computing node. In other words, the computing node may invoke or activate the smart contract system in response to receiving the transaction reports. After being invoked or activated, the smart contract system may execute the plurality of report rules on the transaction reports. As a result, the transaction reports may be validated for files and content of the files. For execution and application of the plurality of data rules during the validation process, the smart contract system may access validated instrument reference data stored in a database of a separate blockchain network (for example, blockchain network 200). The database may be a reference data system database that serves as the public distributed ledger database (for example, public distributed ledger node 316) in the separate blockchain network.

Based on application of the plurality of report rules on the transaction reports, the computing node, at step 606, may determine in real-time whether the transaction reports include one or more discrepancies or not. Examples of one or more discrepancies may include, but are not limited to issues with files or content of the files. The one or more discrepancies may be shared with one or more of the plurality of entities that shared transaction reports with discrepancies. In response, the one or more of the plurality of entities may share corrected transaction reports with the computing node based on the identified discrepancies.

In an embodiment, at step 608, results of validating the raw instrument reference data may be propagated in the blockchain network. In other words, outcome of application of the report rules, which may include one or more discrepancies, may be made available on the public distributed ledger (for example, public distributed ledger node 316) or a result validation node (for example, result validation node 314). The public distributed ledger or the result validation node can be accessed by each of the plurality of financial entities and thus also by the financial entity that submitted erroneous transaction reports. As a result, as soon as the information regarding discrepancy in transaction reports is made available on the public distributed ledger, the financial entity may access this information and re-submit corrected transaction reports. As a result, the delay of two days in submitting corrected transactions reports in conventional systems, is removed and the corrected information is immediately available.

Thus, at step 610, contemporaneous to determining that the transactions reports may include the one or more discrepancies, the computing node may receive corrected transaction reports data from the one or more of the plurality of financial entities. In other words, only those financial entities that had provided data with discrepancies, may need to provide corrected transaction reports to the computing node.

Once corrected transaction reports is received by the computing node, transaction reports received from each of the plurality of financial entities may be consolidated to generate validated transaction reports. Thus, the validated transaction reports may include one or more of original transaction reports (which did not include any discrepancy) and corrected transaction reports (which was received after identifying discrepancies).

Thereafter, the validated transaction reports may be added to the public distributed ledger (for example, public distributed ledger node 316). It will be apparent to a person skilled in the art that steps 602 to 612 would be performed by multiple computing nodes in the blockchain network at any given time. In an embodiment, each of these multiple computing nodes may be regulatory computing nodes and may be associated with a relevant competent authority or the ESMA.

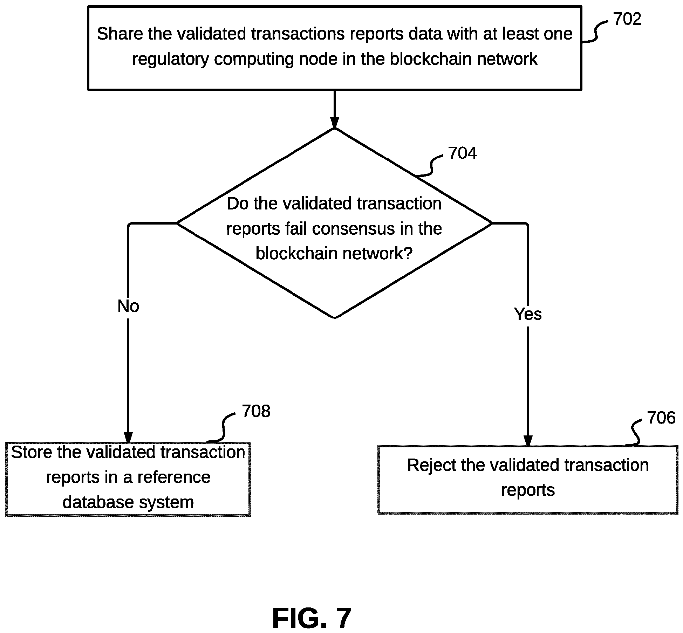

Referring now to FIG. 7, a flowchart of a method for sharing and propagating validated transaction reports in a blockchain network is illustrated, in accordance with an embodiment. Once the validated transactions reports are generated, they may be shared, at step 702, with one or more regulatory computing nodes in the blockchain network. A regulatory computing node, for example, may be associated with a jurisdiction specific relevant competent authority (for example, competent authority regulatory computing node 308) or the ESMA (for example, ESMA computing node 304).

At step 704, a check may be performed to determine whether the validated transaction reports fail consensus in the blockchain network. When the validated transaction reports fail the consensus, the validated transaction reports are rejected at step 706 and may not be further propagated in the blockchain network. However, when the validated transaction reports get the consensus, at step 708 they are stored in a reference data system database that serves as the public distributed ledger database (for example, public distributed ledger node 316).

Thus, the transaction reports may be validated not just by the relevant competent authority but also by each of the other national competent authorities. This ensures that data available in the ledger is reliable and trustworthy. Moreover, validation of the transaction reports by all national competent authorities instead of just the relevant competent authorities makes the validation process transparent and promotes faster identification of market abuse issues.

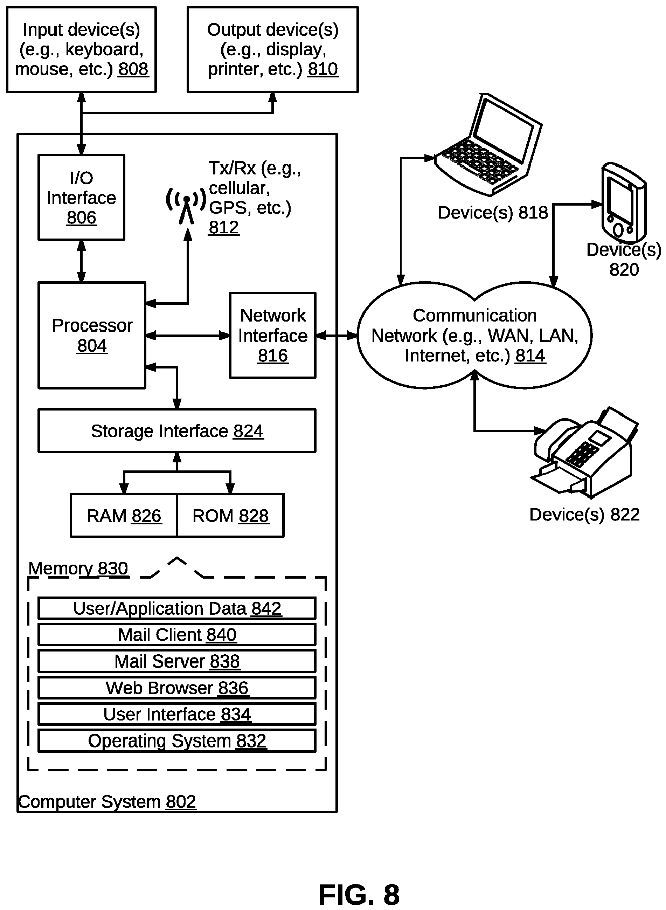

Referring now to FIG. 8, a block diagram of an exemplary computer system for implementing various embodiments is illustrated. Computer system 802 may include a central processing unit ("CPU" or "processor") 804 that includes at least one data processor for executing program components for executing user-generated requests or system-generated requests. A user may include a person, a person using a device such as such as those included in this disclosure, or such a device itself. Processor 804 may include specialized processing units such as integrated system (bus) controllers, memory management control units, floating point units, graphics processing units, digital signal processing units, etc. Processor 804 may include a microprocessor, such as AMD® ATHLON® microprocessor, DURON® microprocessor OR OPTERON® microprocessor, ARM's application, embedded or secure processors, IBM® POWERPC®, INTEL'S CORE® processor, ITANIUM® processor, XEON® processor, CELERON® processor or other line of processors, etc. Processor 804 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 804 may be disposed in communication with one or more input/output (I/O) devices via an I/O interface 806. I/O interface 806 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 806, computer system 802 may communicate with one or more I/O devices. For example, an input device 808 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 810 may be a printer, fax machine, video display (e.g., cathode ray tube (CRT), liquid crystal display (LCD), light-emitting diode (LED), plasma, or the like), audio speaker, etc. In some embodiments, a transceiver 812 may be disposed in connection with processor 804. Transceiver 812 may facilitate various types of wireless transmission or reception. For example, transceiver 812 may include an antenna operatively connected to a transceiver chip (e.g., TEXAS® INSTRUMENTS WILINK WL1283® transceiver, BROADCOM® BCM4550IUB8® transceiver, INFINEON TECHNOLOGIES® X-GOLD 618-PMB9800® transceiver, or the like), providing IEEE 802.11a/b/g/n, Bluetooth, FM, global positioning system (GPS), 2G/3G HSDPA/HSUPA communications, etc.

In some embodiments, processor 804 may be disposed in communication with a communication network 814 via a network interface 816. Network interface 816 may communicate with communication network 814. Network interface 816 may employ connection protocols including, without limitation, direct connect, Ethernet (e.g., twisted pair 50/500/5000 Base T), transmission control protocol/internet protocol (TCP/IP), token ring, IEEE 802.8a/b/g/n/x, etc. Communication network 814 may include, without limitation, a direct interconnection, local area network (LAN), wide area network (WAN), wireless network (e.g., using Wireless Application Protocol), the Internet, etc. Using network interface 816 and communication network 814, computer system 802 may communicate with devices 818, 820, and 822. The devices may include, without limitation, personal computer(s), server(s), fax machines, printers, scanners, various mobile devices such as cellular telephones, smartphones (e.g., APPLE® IPHONE® smartphone, BLACKBERRY® smartphone, ANDROID® based phones, etc.), tablet computers, eBook readers (AMAZON® KINDLE® ereader, NOOK® tablet computer, etc.), laptop computers, notebooks, gaming consoles (MICROSOFT® XBOX® gaming console, NINTENDO® DS® gaming console, SONY® PLAYSTATION® gaming console, etc.), or the like. In some embodiments, computer system 802 may itself embody one or more of the devices.

In some embodiments, processor 804 may be disposed in communication with one or more memory devices (e.g., RAM 826, ROM 828, etc.) via a storage interface 824. Storage interface 824 may connect to memory 830 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory 830 may store a collection of program or database components, including, without limitation, an operating system 832, user interface application 834, web browser 836, mail server 838, mail client 840, user/application data 842 (e.g., any data variables or data records discussed in this disclosure), etc. Operating system 832 may facilitate resource management and operation of computer system 802. Examples of operating systems 832 include, without limitation, APPLE® MACINTOSH® OS X platform, UNIX platform, Unix-like system distributions (e.g., Berkeley Software Distribution (BSD), FreeBSD, NetBSD, OpenBSD, etc.), LINUX distributions (e.g., RED HAT®, UBUNTU®, KUBUNTU®, etc.), IBM® OS/2 platform, MICROSOFT® WINDOWS® platform (XP, Vista/7/8, etc.), APPLE® IOS® platform, GOOGLE® ANDROID® platform, BLACKBERRY® OS platform, or the like. User interface 834 may facilitate display, execution, interaction, manipulation, or operation of program components through textual or graphical facilities. For example, user interfaces may provide computer interaction interface elements on a display system operatively connected to computer system 802, such as cursors, icons, check boxes, menus, scrollers, windows, widgets, etc. Graphical user interfaces (GUIs) may be employed, including, without limitation, APPLE® Macintosh® operating systems' AQUA® platform, IBM® OS/2® platform, MICROSOFT® WINDOWS® platform (e.g., AERO® platform, METRO® platform, etc.), UNIX X-WINDOWS, web interface libraries (e.g., ACTIVEX® platform, JAVA® programming language, JAVASCRIPT® programming language, AJAX® programming language, HTML, ADOBE® FLASH® platform, etc.), or the like.

In some embodiments, computer system 802 may implement a web browser 836 stored program component. Web browser 836 may be a hypertext viewing application, such as MICROSOFT® INTERNET EXPLORER® web browser, GOOGLE® CHROME® web browser, MOZILLA® FIREFOX® web browser, APPLE® SAFARI® web browser, etc. Secure web browsing may be provided using HTTPS (secure hypertext transport protocol), secure sockets layer (SSL), Transport Layer Security (TLS), etc. Web browsers may utilize facilities such as AJAX, DHTML, ADOBE® FLASH® platform, JAVASCRIPT® programming language, JAVA® programming language, application programming interfaces (APis), etc. In some embodiments, computer system 802 may implement a mail server 838 stored program component. Mail server 838 may be an Internet mail server such as MICROSOFT® EXCHANGE® mail server, or the like. Mail server 838 may utilize facilities such as ASP, ActiveX, ANSI C++/C#, MICROSOFT .NET® programming language, CGI scripts, JAVA® programming language, JAVASCRIPT® programming language, PERL® programming language, PHP® programming language, PYTHON® programming language, WebObjects, etc. Mail server 838 may utilize communication protocols such as internet message access protocol (IMAP), messaging application programming interface (MAPI), Microsoft Exchange, post office protocol (POP), simple mail transfer protocol (SMTP), or the like. In some embodiments, computer system 802 may implement a mail client 840 stored program component. Mail client 840 may be a mail viewing application, such as APPLE MAIL® mail client, MICROSOFT ENTOURAGE® mail client, MICROSOFT OUTLOOK® mail client, MOZILLA THUNDERBIRD® mail client, etc.

In some embodiments, computer system 802 may store user/application data 842, such as the data, variables, records, etc. as described in this disclosure. Such databases may be implemented as fault-tolerant, relational, scalable, secure databases such as ORACLE® database OR SYBASE® database. Alternatively, such databases may be implemented using standardized data structures, such as an array, hash, linked list, struct, structured text file (e.g., XML), table, or as object-oriented databases (e.g., using OBJECTSTORE® object database, POET® object database, ZOPE® object database, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments of the invention provide system and method for dual blockchain based validation of instrument reference data and transaction reporting. In the disclosed system and method, a blockchain network is provided with a point of entry for submission of transaction reports set up and maintained by national competent authorities. This may eliminate the need for intermediaries to act as the bridge between the investment firms submitting the data and the national competent authorities. Thus requirement and presence of intermediaries in conventional systems is done away with. The investment firms can directly submit transaction reports to the regulator without going through any intermediaries. With MiFID II proposing inclusion of granular and confidential data such as the client's personal data in the transaction reports, elimination of intermediaries strengthens the protection of confidential customer data. Also, by being able to submit the transaction reports directly to the regulator without any intermediaries, the process of transaction reporting becoming cost efficient for the submitting entities as there is no need to pay the intermediaries for the services that they provide.

The disclosed system and method also solve the issues arising out of absence of a master data repository in the conventional solutions. The data needed by ESMA for validation of instrument reference data is made available on the blockchain by making the entities that provide such data part of the blockchain network. This eliminate the need for ESMA to have multiple interfaces to connect with these entities. Moreover, the challenges involved in building systems and interfaces to connect with multiple entities are eliminated. As a result, access to data is cheaper for the ESMA because of a reduction in the infrastructure related expenses incurred in maintaining such systems and interfaces.

The disclosed system and method also provide real time processing, which is absent in the conventional solutions. Instant validation of the instrument reference data, makes the validation status of the instrument reference data available contemporaneous to its submission. Instant validation of transaction reports and making available their validation status on the chain enhances the speed of subsequent processes, such as, submission of corrected files and records by the entity that originally submitted the erroneous instrument reference data. Instant validation of instrument reference data eliminates the need for relevant competent authorities to wait up to a day after the reception of transaction reports to validate them, thus making the availability of transaction reports to national competent authorities faster. Instant processing and subsequent availability of instrument reference data enables a much faster validation of the transaction reports, which further reduces the delays involved in the transaction reporting process and makes it as close to real time as possible.

The disclosed system and method also eliminates the need for daily reconciliation. Availability of validated instrument reference data in a distributed ledger as the 'golden source of truth' that can be accessed by national competent authorities, the trading venues and systematic internalizers, eliminates the need for them to reconcile the data available in their internal databases with the data provided by ESMA on a daily basis. This makes the data management process cheaper for the entities submitting the instrument reference data as well as for the national competent authorities.

The disclosed system and method also provide data transparency, which is absent in conventional systems. The transaction reports are validated not just by the relevant competent authority but also by each of the other national competent authorities. This means that only when there is consensus among the all the regulators about the reliability of the transaction reports, the transaction reports are updated to the ledger. This ensures that data available in the ledger is reliable and trustworthy. Validation of the transaction reports by all national competent authorities instead of just the relevant competent authorities makes the validation process transparent and promotes faster identification of market abuse issues.

The specification has described system and method for dual blockchain based validation of instrument reference data and transaction reporting. The illustrated steps are set out to explain the exemplary embodiments shown, and it should be anticipated that ongoing technological development will change the manner in which particular functions are performed. Examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art (s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for validation of instrument reference data using a blockchain network, the method comprising:
receiving, by a computing node, raw instrument reference data from a plurality of financial entities, wherein each of the plurality of financial entities and the computing node are part of a blockchain network, and wherein the blockchain network comprises a plurality of computing nodes comprising the computing node;
validating, by the computing node, the raw instrument reference data based on a smart contract system installed in the computing node, wherein the smart contract system executes a plurality of data rules on the raw instrument reference data;
determining in real-time, by the computing node, whether the raw instrument reference data comprises at least one discrepancy, based on application of the plurality of data rules on the raw instrument reference data;
receiving, by the computing node, corrected raw instrument reference data contemporaneous to determining that the raw instrument reference data comprises at least one discrepancy, from one or more of the plurality of financial entities; and
consolidating instrument reference data received from each of the plurality of financial entities to generate validated instrument reference data, wherein the validated instrument reference data comprises at least one of original or corrected raw instrument reference data.

2. The method of claim 1, further comprising storing the validated instrument reference data in a reference data system database, wherein the reference data system database serves as the public distributed ledger database.

3. The method of any of the preceding claims, wherein validating comprises accessing, by the smart contract system, data provided by at least one data validation entity in the blockchain network.

4. The method of any of the preceding claims, wherein the plurality of data rules in the smart contract system comprises at least one of file validation rules, content validation rules, missing report checking rules, and missing records checking rules.

5. The method of any of the preceding claims, wherein the plurality of financial entities comprises at least one of trading venues and system internalizers.

6. The method of any of the preceding claims, further comprising propagating a result of validating the raw instrument reference data in the blockchain network.

7. The method of claim 6, further comprising rejecting the validated raw instrument reference data, when the validated raw instrument reference data fails consensus in the blockchain network.

8. A method for reporting transaction reports using a blockchain network, the method comprising:
receiving, by a computing node, transaction reports from a plurality of financial entities, wherein each of the plurality of financial entities and the computing node are part of a blockchain network, and wherein the blockchain network comprises a plurality of computing nodes comprising the computing node;
validating, by the computing node, the transaction reports based on a smart contract system installed in the computing node, wherein the smart contract system executes a plurality of report rules on the transaction reports based on validated instrument reference data stored in a database;
determining in real-time, by the computing node, whether the transaction reports comprises at least one discrepancy, based on application of the plurality of report rules on the transaction reports;
receiving, by the computing node, corrected transaction reports contemporaneous to determining that the transaction reports comprise at least one discrepancy, from one or more of the plurality of financial entities; and
consolidating, by the computing node, transaction reports received from each of the plurality of financial entities to generate validated transaction reports, wherein the validated transaction reports comprise at least one of original or corrected transaction reports.

9. The method of claim 8, further comprising storing the validated transaction reports in a public distributed ledger database that is a part of the blockchain network.

10. The method of claim 8 or claim 9, wherein the plurality of validation rules in the smart contract system comprises at least one of file validation rules and content validation rules.

11. The method of any of claims 8 to 10, further comprising propagating result of validating the transaction reports in the blockchain network.

12. The method of any of claims 8 to 11, wherein the database is a reference data system database present in a separate blockchain network, and wherein the reference data system database serves as the public distributed ledger database in the separate blockchain network.

13. The method of any of the preceding claims, further comprising sharing the validated instrument reference data or the validated transaction reports with at least one regulatory computing node in the blockchain network.

14. The method of claim 13, wherein one or more of the at least one regulatory computing nodes are master control nodes in the blockchain network.

15. A smart contract system comprising:
a processor; and
a memory communicatively coupled to the processor and having processor instructions stored thereon, causing the system, on execution of the instructions, to perform the method of any of the preceding claims.
